# EUROPÄISCHE PATENTANMELDUNG

(11) **EP 4 737 781 A1**
(43) Veröffentlichungstag der Anmeldung: **06.05.2026**
(21) Anmeldenummer: 24209867.1
(22) Anmeldetag: 30.10.2024
(51) Int. Cl.: F16L 29/04

(54) **KUPPLUNGSTEIL FÜR EINE HYDRAULIKKUPPLUNG**

(71) Anmelder: WALTER STAUFFENBERG GMBH & CO. KG, 58791 Werdohl (DE)
(72) Erfinder: Herr Laufer, Klaus, 58540 Meinerzhagen (DE); Herr Mahlich, Nikolas, 58840 Plettenberg (DE)
(74) Vertreter: Patentanwälte Dörner & Kötter PartG mbB

(57) **Zusammenfassung**

Die Erfindung betrifft ein Kupplungsteil, insbesondere Kupplungsstecker (2), zum Kuppeln mit einem korrespondierenden zweiten Kupplungsteil, insbesondere einer Kupplungsmuffe (3), einer Kupplung (1) für Druckmittelleitungen, insbesondere Hydraulikleitungen, umfassend ein Gehäuse (21, 31), mit einem durchgehenden, in Axialrichtung verlaufenden Strömungskanal (23, 33), einen innerhalb des Strömungskanals (23, 33) in axialer Richtung hin und her verschieblich angeordneten Ventilstößel (61) zum Verschließen des Strömungskanals (23, 33) im nicht gekoppelten Zustand des Kupplungsteils (2, 3), wobei der Ventilstößel (61) eine geschlossene, den Strömungskanal verschließende und eine geöffnete, den Strömungskanal (23, 33) nicht verschließende Ventilstellung aufweist, eine Verbindungseinrichtung zur mechanischen Verbindung des Kupplungsteils mit dem zu kuppelnden zweiten Kupplungsteil, wobei das Kupplungsteil (2, 3) ein Basisteil (4, 4*) und ein Anschlussteil (5) umfasst, welche miteinander verbunden sind und den Strömungskanal (23, 33) ausbilden, wobei das Anschlussteil (5) einen Anschlussabschnitt zum Anschluss einer Druckmittelleitung aufweist, wobei das Basisteil (4, 4*) und Anschlussteil (5) jeweils wenigstens einen Verbindungsabschnitt (43, 56) aufweise und wobei wenigstens ein Verbindungsabschnitt (43, 56) des Anschlussteils (5) radial mit einem Verbindungsabschnitt des Basisteils (4, 4*) verpresst ist.

## Beschreibung

Die Erfindung betrifft ein Kupplungsteil, insbesondere einen Kupplungsstecker, zum Kuppeln mit einem korrespondierenden Kupplungsteil, insbesondere einer Kupplungsmuffe, für eine Kupplung für Druckmittelleitungen, insbesondere Hydraulikleitungen, nach dem Oberbegriff des Patentanspruchs 1.

Derartige Kupplungen sind beispielsweise als Steckkupplungen oder Schraubkupplungen ausgebildet und gewährleisten ein schnelles Verbinden und Trennen von zwei Druckmittel-, insbesondere Hydraulikleitungen. Sie werden insbesondere dazu verwendet, hydraulische Geräte an eine Hydraulikquelle anzuschließen, beispielsweise zum Anschließen eines Werkzeugs an eine landwirtschaftliche Maschine oder eine Baumaschine. Die Kupplungen weisen zwei zusammensteckbare Kupplungsteile, nämlich einen Kupplungsstecker und eine Kupplungsmuffe, auf. Beide Kupplungsteile weisen einen axialen Strömungskanal für das Druckmittel auf. Der Kupplungsstecker ist in eine Aufnahmeöffnung der Kupplungsmuffe einsteckbar und mit dieser lösbar verriegelbar. Erfolgt die Verriegelung mittels Verschraubung, z. B. durch eine Verriegelungshülse, handelt es sich um eine Schraubkupplung. Eine Steckkupplung weist als Verriegelungsmittel z. B. eine Sperrkugelverriegelung auf. Jedes Kupplungsteil weist zudem ein Kupplungsgehäuse auf, innerhalb welchem ein federbelastetes Ventil angeordnet ist. Im ungekuppelten Zustand sind die Ventile derart angeordnet, dass sie den Strömungskanal des jeweiligen Kupplungsteils verschließen. Beim Zusammenstecken der beiden Kupplungsteile öffnen sich die Ventile gegenseitig selbsttätig, wodurch die beiden Strömungskanäle miteinander verbunden sind, und beim Auskuppeln verschließen die Ventile den jeweiligen Strömungskanal mittels Federkraft selbsttätig.

Die Kupplungsteile weisen jeweils ein Gehäuse auf, das aus einem das Ventil aufweisenden Basisteil und einem einen Anschluss für eine Druckmittelleitung oder eine Maschine aufweisenden Anschlussteil gebildet ist. Basisteil und Anschlussteil sind regelmäßig als separate Bauteile gefertigt, die jeweils mit einem Gewinde versehen sind, über welche sie anschließend miteinander verschraubt werden. Kupplungen mit solchen Kupplungsteilen sind beispielsweise in der DE 10 2014 010 570 A1 und der EP 4 390 207 A1 beschrieben.

Kupplungen der vorstehenden Art sind im Laufe ihrer Betriebszeit mechanischen Lasten und Vibrationen ausgesetzt. Um einem ungewollten Lösen der Schraubverbindungen zwischen Basisteil und Anschlussteil entgegenzuwirken, ist es bekannt, die Schraubverbindungen durch Klebstoffe zu sichern. Obwohl die meisten Schraubverbindungen heute mit derartigen chemischen Schraubensicherungen versehen sind, kommt es vor, dass sich die Schraubenverbindung durch angreifende Lasten und Umwelteinflüsse über die Lebensdauer trotzdem löst. Dies kann zu Beschädigungen an den Kupplungsteilen führen, wodurch die Kupplungsfunktion beeinträchtigt oder gar unbrauchbar gemacht sein kann.

Hier will die Erfindung Abhilfe schaffen. Der Erfindung liegt die Aufgabe zu Grunde, ein Kupplungsteil, insbesondere einen Kupplungsstecker, zum Kuppeln mit einem korrespondierenden Kupplungsteil, insbesondere einer Kupplungsmuffe, einer Kupplung für Druckmittelleitungen, insbesondere Hydraulikleitungen, sowie auch eine solche Kupplung bereitzustellen, bei dem ein Lösen der Verbindung zwischen Basisteil und Anschlussteil zuverlässig verhindert ist. Gemäß der Erfindung wird diese Aufgabe durch ein Kupplungsteil mit den Merkmalen des kennzeichnenden Teils des Patentanspruchs 1 gelöst.

Mit der Erfindung ist ein Kupplungsteil, insbesondere ein Kupplungsstecker, zum Kuppeln mit einem korrespondierenden Kupplungsteil, insbesondere einer Kupplungsmuffe, einer Kupplung für Druckmittelleitungen, insbesondere Hydraulikleitungen, bereitgestellt, bei dem ein Lösen der Verbindung zwischen Basisteil und Anschlussteil zuverlässig verhindert ist. Dadurch, dass das Basisteil und Anschlussteil jeweils wenigstens einen Verbindungsabschnitt aufweisen, wobei wenigstens ein Verbindungsabschnitt des Anschlussteils radial mit einem Verbindungsabschnitt des Basisteils verpresst ist, ist eine zuverlässige Verbindung zwischen Basisteil und Anschlussteil erzielt.

Unter dem Begriff "Verpressen" wird vorliegend ein Fügeprozess verstanden, bei dem zwei Teile unter Beteiligung eines Umformprozesses miteinander verbunden werden. Unter einem "radialen Verpressen" wird ein Verpressen mit ausschließlich oder überwiegend radialen Presskräften verstanden.

In Weiterbildung der Erfindung ist wenigstens ein Verbindungsabschnitt des Basisteils zumindest bereichsweise mit einer Verzahnung versehen, die in eine in einem Verbindungsabschnitt des Anschlussteils vorhandene Verzahnung eingreift, wobei die Verzahnungen der Verbindungsabschnitte des Basisteils und des Anschlussteils radial miteinander verpresst sind. Hierdurch ist die wirksame Verbindungsfläche erhöht, wodurch die Verbindung zwischen Basisteil und Anschlussteil weiter verbessert ist.

In Ausgestaltung der Erfindung ist benachbart zu der Verzahnung eines Verbindungsabschnitts ein Umformabschnitt angeordnet, durch dessen Verformung die Verpressung erzielt ist. Hierdurch ist ein verbesserter Kraftschluss erzielt. Vorteilhaft weist die Verzahnung wenigstens einen Bereich mit einer im Querschnitt dreieckförmigen und/oder einer im Querschnitt trapezförmigen und/oder einer im Querschnitt rechteckförmigen Verzahnung auf.

In weiterer Ausgestaltung der Erfindung weist die Verzahnung Zähne unterschiedlicher Höhe auf. Hierdurch ist der Kraft-Formschluss weiter verbessert.

In weiterer Ausgestaltung der Erfindung weist die Verzahnung Zähne auf, deren beiden Flanken einen unterschiedlichen Winkel zum Zahngrund aufweisen. Hierdurch ist der Formschluss weiter verbessert. Vorteilhaft beträgt der jeweilige Winkel zwischen 45° und 60°. Unter dem "Zahngrund" ist vorliegend die Ebene der Mantelfläche zu verstehen, auf welcher der Zahn aufgesetzt ist.

In Weiterbildung der Erfindung schließt sich an die Verzahnung eine Ringnut zur Aufnahme eines Dichtrings an. Hierdurch ist eine zusätzliche Abdichtung des Anschlussteils gegenüber dem Basisteil erzielt.

In Ausgestaltung der Erfindung ist wenigstens ein Verbindungsabschnitt des Basisteils zumindest bereichsweise mit einem Gewinde versehen, das mit einem in einem Verbindungsabschnitt des Anschlussteils vorhandenen Gewinde im Gewindeeingriff ist. Hierdurch ist eine definierte axiale Positionierung von Basisteil und Anschlusssteil im Zuge der Montage über einen Einschraubvorgang erzielt. Zudem ist über den Gewindeeingriff eine zusätzliche Verbindung erzielt.

In weiterer Ausgestaltung der Erfindung weisen das Basisteil und das Anschlussteil jeweils eine axiale Anschlagfläche auf, die aneinander anliegen, wobei sich an das Gewinde des Basisteils (oder alternativ des Anschlussteils) an seiner der Anschlagfläche zugewandten Seite ein Übermaßabschnitt und an das Gewinde des Anschlussteils (oder alternativ des Basisteils) an seiner der Anschlagfläche zugewandten Seite ein in Axialrichtung sich verengender Pressabschnitt anschließt, wobei der Übermaßabschnitt über den Einschraubvorgang mit dem Pressabschnitt zumindest anteilig radial verpresst ist. Hierdurch ist eine Verpressung zwischen Basisteil und Anschlussteil über die axiale Einschraubkraft erzielt. Durch die axiale Bewegung des an dem Basisteil angeordneten Übermaßabschnitts in den sich verengenden Pressabschnitt ist eine Verpressung zwischen Basisteil und Anschlussteil in diesem Bereich bewirkt.

Der Übermaßabschnitt weist eine definierte, bevorzugt konische Geometrie auf, wobei der Pressabschnitt ein im Durchmesser vermindertes Gegenstück hierzu bildet. Der Betrag der Durchmesserdifferenz sollte je nach Durchmesser nicht größer als 0,1 mm bis 0,5 mm gewählt werden. Die Geometrie selbst besteht vorzugsweise aus einer konisch im Winkel von zwischen 5° und 85° zur Mittelachse zulaufenden Fläche, die bevorzugt einen Winkel von zwischen 5° und 45° zur Mittelachse aufweist.

Durch diese Verpressung, die durch eine gezielte Überschneidung der beiden bevorzugt konischen Geometrien beim Einschraubvorgang bewirkt ist, ist die Schraubverbindung, die ergänzend auch noch in bekannter Art und Weise mit einem chemischen Sicherungsmittel versehen sein kann, effektiv gegen Lösen gesichert, wodurch eine zuverlässige Verbindung erzielt ist.

In Weiterbildung der Erfindung ist in der Anschlagfläche des Basisteils und/oder der Anschlagfläche des Anschlussteils eine Ringnut oder ein Absatz zur Aufnahme eines Dichtrings angeordnet. Hierdurch ist eine zusätzliche Abdichtung des Basisteils gegenüber dem Anschlussteil erzielt. Alternativ oder zusätzlich kann zwischen dem Gewinde und dem Übermaßabschnitt in dem Basisteil und/oder dem Anschlussteil eine Ringnut oder ein Absatz zur Aufnahme eines Dichtrings angeordnet sein.

Durch den sich in der Kupplung während des Betriebs aufbauenden hydraulischen Druck dehnen sich die einzelnen Komponenten unterschiedlich stark aus (Dilatation). Die fluiddichte Abdichtung zwischen Anschlussteil und Grundkörper kann direkt über entsprechend ausgeführte Konus Flächen oder durch den Einbau einer zusätzlichen Weichdichtung, beispielsweise durch einen O-Ring aus einem Elastomer, erfolgen. Durch die Positionierung der Abdichtung zwischen dem Anschlussteil und dem Grundkörper kann die Dehnung der Komponenten beeinflusst werden. Für diesen Lösungsvorschlag ist die Positionierung einer Weichdichtung, vorzugsweise axial zwischen dem Anschlussteil und dem Basiskörper, vorteilhaft.

Erreicht wird damit, dass der Basiskörper eine größere Dehnung als das Anschlussteil erfährt. Damit wird unter Einfluss des inneren Drucks die Flächenpressung zwischen den vorzugsweise konischen Auflageflächen von Übermaßabschnitt und Pressabschnitt, aufgrund der Dehnungsunterschiede zwischen den beiden Körpern zusätzlich vergrößert. Äußere Momente, die das Lösen der Verbindung begünstigen, wirken vorranging zu den druckbelasteten Phasen. Diese Phasen sind aber auch die, zu denen die Flächenpressung zwischen den Konusflächen am größten sind. Somit ist gerade diesen Phasen eine maximale Sicherheit gegen unbeabsichtigtes Lösen der Verbindung zwischen Basisteil und Anschlussteil gegeben.

Gegenstand der vorliegenden Erfindung ist weiterhin eine Kupplung für eine Druckmittelleitung mit den Merkmalen des Patentanspruchs 12. Vorzugsweise weisen der Kupplungsstecker und die Kupplungsmuffe jeweils einen Ventilstößel auf, die im Zuge der Verbindung von Kupplungsstecker und Kupplungsmuffe aneinander liegen und jeweils entgegen einer Federvorspannung axial in eine geöffnete Ventilstellung verschoben sind, wodurch die axialen Strömungskanäle von Kupplungsstecker und Kupplungsmuffe geöffnet und miteinander verbunden sind.

Andere Weiterbildungen und Ausgestaltungen der Erfindung sind in den übrigen Unteransprüchen angegeben. Ausführungsbeispiele der Erfindung sind den Zeichnungen dargestellt und werden nachfolgend im Einzelnen beschrieben. Dabei sind gleiche Bauteile mit gleichen Bezugsziffern versehen, wobei Bauteile von abweichenden Ausführungsformen mit einer tiefgestellten Ziffer gekennzeichnet sind, welche die jeweilige abgewandelte Ausführungsform angeben. Von dem Kupplungsstecker abweichende Bauteile der Kupplungsmuffe sind mit einem * gekennzeichnet. Es zeigen:
- Fig. 1: die schematische Darstellung einer Kupplung im Teilschnitt;
- Fig. 2: die schematische Darstellung des Kupplungssteckers der Kupplung aus Figur 1 im Teilschnitt;
- Fig. 3: die schematische Darstellung der Kupplungsmuffe der Kupplung aus Figur 1 im Teilschnitt;
- Fig. 4: die Detaildarstellung des Ausschnitts "Z" des Kupplungssteckers aus Fig. 2;
- Fig. 5: die schematische Darstellung eines Kupplungssteckers einer Kupplung einer zweiten Ausführungsform;
- Fig. 6: die Detaildarstellung des Ausschnitts "Z" des Kupplungssteckers aus Fig. 5;
- Fig. 7: die schematische Darstellung einer Kupplung einer dritten Ausführungsform im Teilschnitt;
- Fig. 8: die schematische Darstellung des Kupplungssteckers der Kupplung aus Figur 7 im Teilschnitt;
- Fig. 9: die schematische Darstellung der Kupplungsmuffe der Kupplung aus Figur 7 im Teilschnitt;
- Fig. 10: die Detaildarstellung des Ausschnitts "Z" des Kupplungssteckers aus Fig. 8;
- Fig. 11: die schematische Darstellung einer Kupplung einer vierten Ausführungsform im Teilschnitt;
- Fig. 12: die schematische Darstellung des Kupplungssteckers der Kupplung aus Figur 11 im Teilschnitt
a) vor Verpressen der Verbindung von Basisteil und Anschlussteil;
b) nach Verpressen der Verbindung von Basisteil und Anschlussteil;
- Fig. 13: die schematische Darstellung der Kupplungsmuffe der Kupplung aus Figur 11 im Teilschnitt
a) vor Verpressen der Verbindung von Basisteil und Anschlussteil;
b) nach Verpressen der Verbindung von Basisteil und Anschlussteil;
- Fig. 14: die schematische Darstellung eines Kupplungssteckers einer Kupplung einer fünften Ausführungsform im Teilschnitt
a) vor Verpressen der Verbindung von Basisteil und Anschlussteil;
b) nach Verpressen der Verbindung von Basisteil und Anschlussteil;
- Fig. 15: die schematische Darstellung eines Kupplungssteckers einer Kupplung einer sechsten Ausführungsform im Teilschnitt
a) vor Verpressen der Verbindung von Basisteil und Anschlussteil;
b) nach Verpressen der Verbindung von Basisteil und Anschlussteil;
- Fig. 16: die schematische Darstellung eines Kupplungssteckers einer Kupplung einer siebten Ausführungsform im Teilschnitt
a) vor Verpressen der Verbindung von Basisteil und Anschlussteil;
b) nach Verpressen der Verbindung von Basisteil und Anschlussteil;
- Fig. 17: die schematische Darstellung einer Kupplung einer achten Ausführungsform im Teilschnitt
a) vor Verpressen der Verbindung von Basisteil und Anschlussteil;
b) nach Verpressen der Verbindung von Basisteil und Anschlussteil;
- Fig. 18: die schematische Darstellung des Kupplungssteckers der Kupplung aus Figur 17 im Teilschnitt
a) vor Verpressen der Verbindung von Basisteil und Anschlussteil;
b) nach Verpressen der Verbindung von Basisteil und Anschlussteil;
- Fig. 19: die schematische Darstellung der Kupplungsmuffe der Kupplung aus Figur 17 im Teilschnitt
a) vor Verpressen der Verbindung von Basisteil und Anschlussteil;
b) nach Verpressen der Verbindung von Basisteil und Anschlussteil;
- Fig. 20: die Detaildarstellung des Ausschnitts "Z" des Kupplungssteckers aus Fig. 18
a) vor Verpressen der Verbindung von Basisteil und Anschlussteil;
b) nach Verpressen der Verbindung von Basisteil und Anschlussteil;
- Fig. 21: die schematische Darstellung des Kupplungssteckers einer Kupplung einer neunten Ausführungsform im Teilschnitt
a) vor Verpressen der Verbindung von Basisteil und Anschlussteil;
b) nach Verpressen der Verbindung von Basisteil und Anschlussteil;
- Fig. 22: die Detaildarstellung des Ausschnitts "Z" des Kupplungssteckers aus Fig. 21
a) vor Verpressen der Verbindung von Basisteil und Anschlussteil;
b) nach Verpressen der Verbindung von Basisteil und Anschlussteil;
- Fig. 23: die schematische Darstellung einer Kupplung einer zehnten Ausführungsform im Teilschnitt;
- Fig. 24: die schematische Darstellung des Kupplungssteckers der Kupplung aus Figur 23 im Teilschnitt;
- Fig. 25: die schematische Darstellung der Kupplungsmuffe der Kupplung aus Figur 23 im Teilschnitt;

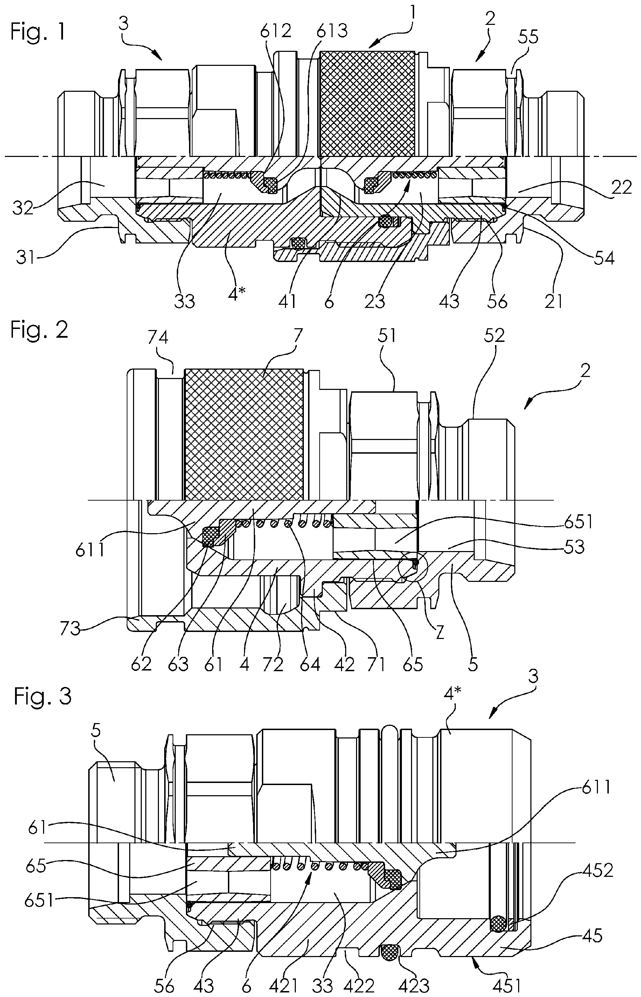

Die als Ausführungsbeispiel gemäß Figur 1 gewählte Hydraulikkupplung 1 ist aus einem Kupplungsstecker 2 und einer Kupplungsmuffe 3 gebildet.

Der Kupplungsstecker 2 weist ein Gehäuse 21 auf, dass durch ein Basisteil 4 gebildet ist, das mit einem Anschlussteil 5 verbunden ist und auf dem eine Verriegelungshülse 7 drehbar angeordnet ist. Das Gehäuse 21 ist hohl ausgebildet und weist eine Durchführung 22 auf, in der eine Ventilanordnung 6 angeordnet ist, durch die ein in Axialrichtung verlaufender erster Strömungskanal 23 begrenzt ist.

Die Ventilanordnung 6 umfasst einen als Ventilkörper fungierenden Ventilstößel 61, der endseitig einen durchmessererweiterten Dichtkonus 611 aufweist der an seinem breiteren Ende abgestuft ausgebildet ist, wodurch zwei axial und radiale konzentrische Absätze 612, 613 gebildet sind. Auf dem äußeren, ersten Absatz 612 ist ein Dichtungsring 62 angeordnet, der radial über den Dichtkonus 611 hervorragt. In axialer Richtung ragt der Dichtungsring 62 geringfügig über den erste Absatz 612 hervor. Auf dem inneren, zweiten Absatz 613 ist ein Anschlagring 63 angeordnet. Der Anschlagring 63 weist außen einen ringförmig umlaufenden Steg 631 auf, der in eine hierzu in dem Dichtungsring 62 vorhandene ringförmige Aussparung 621 eingreift. Auf dem Ventilstößel 61 ist diesen umfassend eine Spiralfeder 64 angeordnet, über die der Ventilstößel 61 in seine Dichtposition vorgespannt ist. Der Anschlagring 63 ist auf den Ventilstößel 61 aufgepresst. (Alternativ kann der Anschlagring 63 auch über die Spiralfeder 64 gegen den Dichtungsring 62 vorgespannt sein.) Auf ihrer dem Anschlagring 63 gegenüberliegenden Seite liegt die Spiralfeder 64 an einem Strömungsring 65 an, der in das Basisteil 4 des Gehäuses 21 eingebracht ist und an dem Anschlussteil 5 anliegt, gegen das er über die Spiralfeder 64 vorgespannt ist. In den Strömungsring 65 sind umlaufend Strömungskanäle 651 eingebracht. Der Innendurchmesser des Strömungsrings 65 entspricht etwa dem endseitigen Außendurchmesser des Ventilstößels 61, der in den Strömungsring 65 hineinragt, durch den er geführt ist. Der Außendurchmesser des Strömungsrings 65 entspricht im Wesentlichen dem Innendurchmesser des Basisteils 4, an dem der Strömungsring 65 anliegt.

Das Basisteil 4 des Gehäuses 21 ist im Wesentlichen hohlzylindrisch ausgebildet. An seinem dem Dichtkonus 611 des Ventilstößels 61 zugewandten Ende weist das Basisteil 4 innen einen Innenkonus 41 auf, an dem der Dichtkonus 611 des Ventilstößels 61 anliegt, gegen den er über die Spiralfeder 64 vorgespannt ist. Der Dichtkonus 611 ist über den Dichtungsring 62 gegen den Innenkonus 611 abgedichtet. Etwa mittig ist an dem Basisteil 4 außen umlaufend ein Steg 42 vorhanden. Beabstandet zu dem Steg 42 ist an seiner dem Innenkonus 41 entgegengerichteten Seite ein Verbindungsabschnitt 43 vorhanden, in den ein Außengewinde 431 eingebracht ist. Beabstandet zu dem Außengewinde 431 ist in dem Verbindungsabschnitt 43 ein Übermaßabschnitt 432 angeordnet, der sich bis in die Stirnseite des Basisteils 4 erstreckt. Der Übermaßabschnitt 432 ist im Ausführungsbeispiel konusförmig ausgebildet. Beabstandet zu dem Übermaßabschnitt 432 ist in der Stirnseite des Basisteils 4 eine Ausnehmung 44 eingebracht.

Das Anschlussteil 5 ist in Form eines rotationssymmetrischen Hohlkörpers ausgebildet. Es weist einen ersten Abschnitt 51 auf, der in Form eines Au-ßensechskants ausgeführt ist, an den sich ein zweiter Abschnitt 52 anschließt, der in Form eines Leitungsanschlusses ausgeführt ist. Durch das Anschlussteil 5 ist zentrisch eine axiale Stufenbohrung 53 geführt, durch die ein Absatz 54 gebildet ist.

In den ersten Abschnitt 51 ist außen umlaufend eine Nut 55 eingebracht. Innen ist in dem ersten Abschnitt 51 ein Verbindungsabschnitt 56 vorhanden, der sich bist zu dem Absatz 54 erstreckt. In dem Verbindungsabschnitt 56 ist ein Innengwinde 561 angeordnet. Beabstandet zu dem Innengewinde 561 befindet sich ein Pressabschnitt 562, der in dem Absatz 54 mündet. Der Pressabschnitt 562 ist im Ausführungsbeispiel in Form eines Innenkonus ausgebildet, dessen Innendurchmesse größer ist, als der Außendurchmesser des konischen Übermaßabschnitts 432 des Basisteils 4. Die Differenz des Innendurchmessers zum Außendurchmesser kann je nach Größe zwischen 0,1 mm und 0,5 mm betragen.

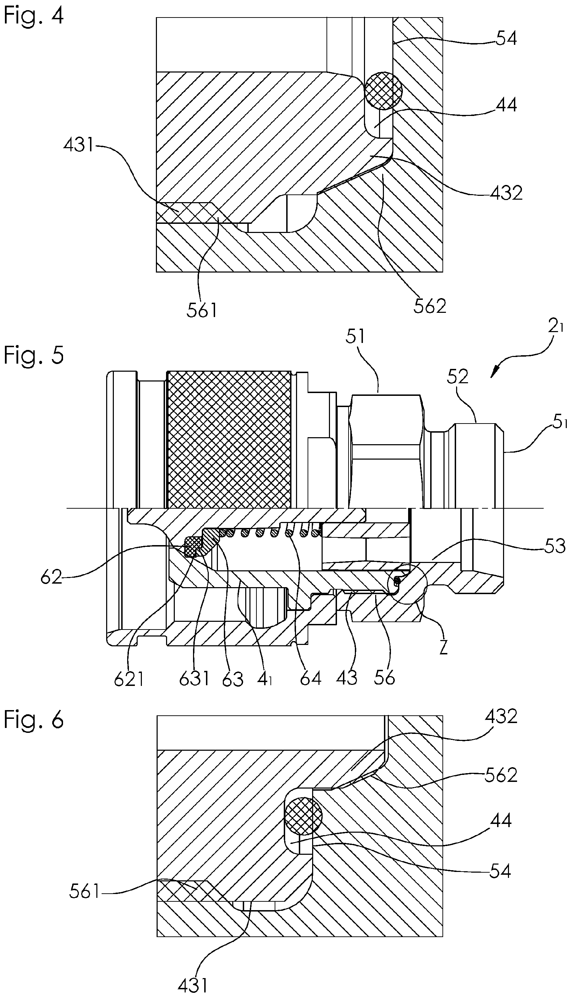

Das Anschlussteil 5 ist mit seinem Innengewinde 561 auf das Außengewinde 451 des Basisteils 4 aufgeschraubt, wobei die Stirnseite des Basisteils 4 an den Absatz 54 des Anschlussteils 5 anliegt. Im Zuge des Schraubvorgangs ist der konische Übermaßabschnitt 432 in dem Pressabschnitt 562 hineingezwängt, wodurch er radial mit den Pressabschnitt 562 verpresst ist (vgl. Figur 4). In die Ausnehmung 44 des Basisteils 4 ist ein O-Ring eingebracht, über den das Basisteil 4 gegenüber den Anschlussteil 5 abgedichtet ist. Der von dem Basisteil 4 aufgenommene Strömungsring 65 liegt an dem Absatz 54 des Anschlussteils 5 an.

Die Verriegelungshülse 7 ist im Wesentlichen hohlzylindrisch ausgebildet und außen umlaufend mit einer Kordierung versehen. An ihrem dem Anschlussteil 5 zugewandten Ende ist ein Flanschteil 71 mit L-förmigen Querschnitt angeordnet, mit dem die Verriegelungshülse 7 auf dem umlaufenden Steg 42 des Basisteils 4 aufliegt. Die Verriegelungshülse 7 ist so zwischen dem Steg 42 und dem Anschlussteil 5 drehbar gehalten. Innen ist in der Verriegelungshülse 7 eine Ringnut 72 eingebracht, die sich axial bis zu dem Flanschteil 71 erstreckt, durch das diese begrenzt ist. An ihrem dem Flanschteil 71 gegenüberliegenden Ende weist die Verriegelungshülse 7 einen Innendurchmesser-erweiterten Abschnitt 73 auf, in dem außen eine umlaufende Nut 74 eingebracht ist.

Die Kupplungsmuffe 3 ist im Wesentlichen identisch zu dem Kupplungsstecker 2 ausgebildet. Sie weist ein Gehäuse 31 auf, das durch ein gegenüber dem Kupplungsstecker 2 verändertes Basisteil 4* gebildet ist, das mit einem Anschlussteil 5 verbunden ist. Das Gehäuse 31 ist hohl ausgebildet und weist eine Durchführung 32 auf, in der eine Ventilanordnung 6 angeordnet ist, durch die ein in Axialrichtung verlaufender zweiter Strömungskanal 33 begrenzt ist.

Abweichend von dem Basisteil 4 des Kupplungssteckers 2 befindet sich bei dem Basisteil 4* der Kupplungsmuffe 3 an Stelle des Steges 42 ein verbreiteter Abschnitt 421, der außen mit zwei axial beabstandet zueinander angeordneten umlaufenden Nuten 422, 423 versehen ist. Endseitig ist an dem Basisteil 4 ein Ringstück 45 vorhanden, das beabstandet zu der äußeren zweiten Nut 423 mit einem Außengewinde 451 versehen ist. Auf seiner dem Außengewinde 451 gegenüberliegenden Seite ist in das Ringstück 45 eine Nut 452 eingebracht, die einen Dichtring aufnimmt.

Die Kupplungsmuffe 3 ist auf den Kupplungsstecker 2 aufgesteckt, wobei das Ringstück 45 des Basisteils 4* der Kupplungsmuffe 3 das Basisteil 4 des Kupplungssteckers 2 umfasst und das Ringstück 45 an dem Steg 42 des Kupplungssteckers 2 anliegt. Das Basisteil 4* ist über den in der Nut 452 angeordneten Dichtring gegenüber dem Basisteil 4 des Kupplungssteckers 2 abgedichtet. Die Verriegelungshülse 7 ist mit ihrem Innengewinde 75 auf das Außengewinde 451 des Ringstücks 45 des Basisteils 4* aufgeschraubt. Die Verriegelungshülse 7 ist über den in der äußeren zweiten Nut 423 angeordneten O-Ring gegenüber dem Basisteil 4* der Kupplungsmuffe 3 abgedichtet.

Beim Aufstecken der Kupplungsmuffe 3 auf den Kupplungsstecker 2 werden die Ventilstößel 61 von Kupplungsmuffe 3 und Kupplungsstecker 2 jeweils entgegen der Vorspannkraft der jeweiligen Spiralfeder 64 in Richtung des jeweiligen Anschlussteils 5 nach hinten bewegt, wodurch der erste Strömungskanal 23 des Kupplungssteckers 2 und der zweite Strömungskanal 33 der Kupplungsmuffe 3 freigegeben werden und sich zu einem Strömungskanal ergänzen.

Im Ausführungsbeispiel gemäß Figur 5 ist beabstandet zu dem Steg 42 des Basisteils 4₁ des Kupplungssteckers 2₁ an seiner dem Innenkonus 41 entgegengerichteten Seite wiederum ein Verbindungsabschnitt 43 vorhanden, in den ein Außengewinde 431 eingebracht ist. Hier ist das Außengewinde 431 jedoch bis zur Stirnseite des Basisteils 4₁ geführt. In die Stirnseite ist eine Ausnehmung 44 zur Aufnahme eines O-Rings eingebracht, an die sich ein axial sich erstreckender Übermaßabschnitt 432 anschließt. Der Übermaßabschnitt 432 ist im Ausführungsbeispiel konusförmig ausgebildet.

Das Anschlussteil 5₁ weist wiederum einen ersten Abschnitt 51 auf, der in Form eines Außensechskants ausgeführt ist, an den sich ein zweiter Abschnitt 52 anschließt, der in Form eines Leitungsanschlusses ausgeführt ist. Durch das Anschlussteil 5₁ ist zentrisch eine axiale Stufenbohrung 53 geführt, durch die ein Absatz 54 gebildet ist. Innen ist in dem ersten Abschnitt 51 wiederum ein Verbindungsabschnitt 56 vorhanden, der sich bis zu dem Absatz 54 erstreckt und in dem ein Innengwinde 561 angeordnet ist, das sich bis zum Absatz 54 erstreckt. In den Absatz 54 ist ein Pressabschnitt 562 eingebracht, der in Form eines Innenkonus ausgebildet ist, dessen Innendurchmesse größer ist, als der Außendurchmesser des konischen Übermaßabschnitts 432 des Basisteils 4₁. Die Differenz des Innendurchmessers zum Außendurchmesser kann je nach Größe wiederum zwischen 0,1 mm und 0,5 mm betragen.

Das Anschlussteil 5₁ ist mit seinem Innengewinde 561 auf das Außengewinde 431 des Basisteils 4₁ aufgeschraubt, wobei die Stirnseite des Basisteils 4₁ an dem Absatz 54 des Anschlussteils 5₁ anliegt. Im Zuge des Schraubvorgangs ist der sich von der Stirnseite axial erstreckende konische Übermaßabschnitt 432 in den in den Absatz 54 eingebrachten Pressabschnitt 562 hineingezwängt, wodurch er radial flächig mit den Pressabschnitt 562 verpresst ist (vgl. Figur 6). In die Ausnehmung 44 des Basisteils 4₁ ist ein O-Ring eingebracht, über den das Basisteil 4₁ gegenüber dem Absatz 54 des Anschlussteils 5₁ abgedichtet ist. Selbstverständlich kann die Verbindung von Basisteil und Anschlussteil einer mit diesem Kupplungsstecker 2₁ kuppelbaren Kupplungsmuffe in der gleichen Weise ausgeführt sein.

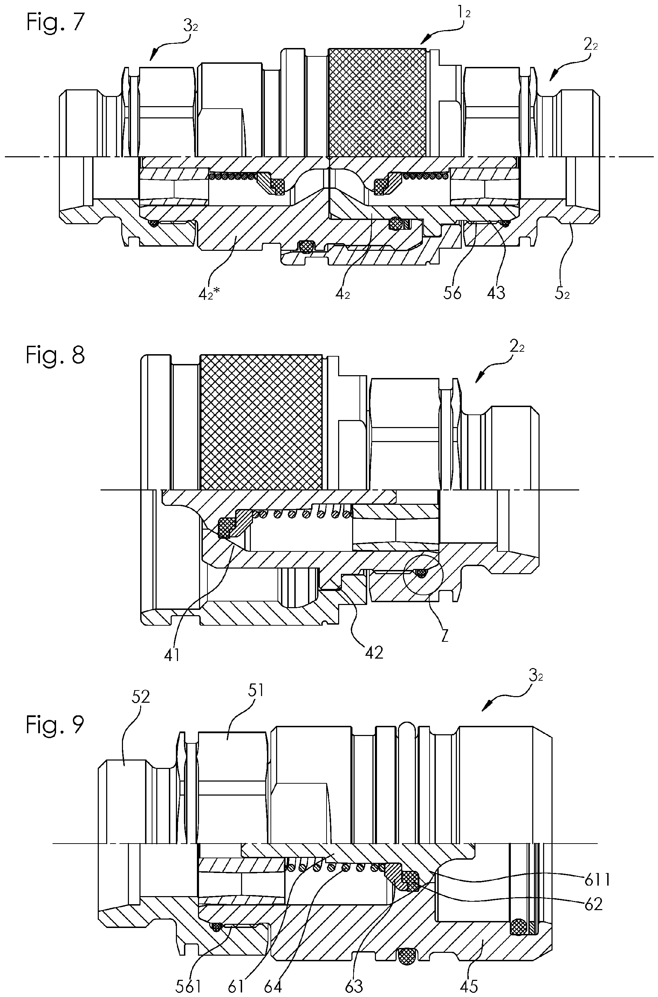

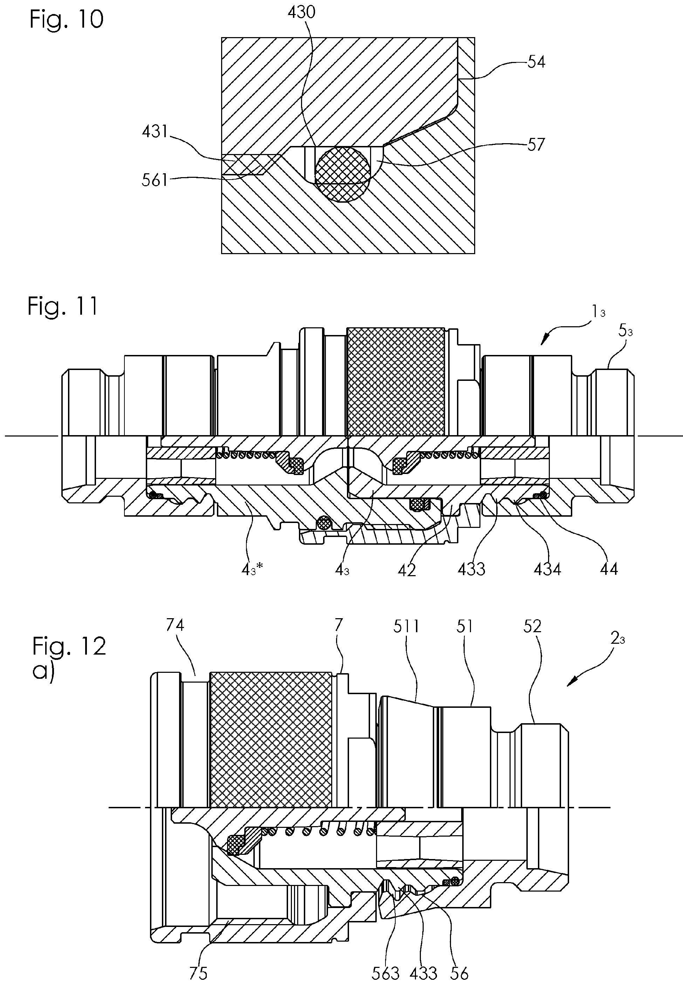

Die Hydraulikkupplung 1₂ gemäß Figur 7 entspricht im Wesentlichen der Hydraulikkupplung 1 gemäß Figur 1, wobei die Verbindungsabschnitte 43, 56 von Basisteil 4₂ und Anschlussteil 5₂ bei dem Kupplungsstecker 2₂ und der Kupplungsmuffe 3₂ in Bezug auf die Anordnung des O-Rings zur Abdichtung des Basisteils 4₂ gegenüber dem Anschlussteil 5₂ verändert ist. In diesem Ausführungsbeispiel ist der O-Ring in eine zwischen dem Innengewinde 561 und dem Absatz 54 des ersten Abschnitts des Anschlussteils 5₂ eingebrachte Nut 57 eingebracht. Das Außengewinde 431 des Basisteils 4₂ ist verkürzt ausgebildet, wodurch eine Dichtfläche 430 vorhanden ist, an welcher der in der Nut 57 des Anschlussteils 5₂ angeordnete O-Ring dichtend anliegt (vgl. Figur 10).

Die Hydraulikkupplung 1₃ gemäß Figur 11 entspricht im Wesentlichen der Hydraulikkupplung 1 gemäß Figur 1, wobei die Verbindungsabschnitte 43, 56 von Basisteil 4₃ und Anschlussteil 5s bei dem Kupplungsstecker 2₃ und der Kupplungsmuffe 3₃ abweichend ausgebildet sind.

Wie in Figur 11 dargestellt, ist in dem beabstandet zu dem Steg 42 des Basisteils 4₃ angeordneten Verbindungsabschnitt 43 des Kupplungssteckers 2 eine Innenverzahnung 433 eingebracht, deren Täler unterschiedlich tief ausgebildet sind. Im Ausführungsbeispiel sind zwei Täler vorhanden, deren Tiefe in Richtung des Steges 42 zunimmt. An die Innenverzahnung 433 schließt sich eine Einpressmulde 434 an. Beabstandet zu der Einpressmulde 434 ist endseitig eine Ausnehmung 44 zur Aufnahme eines O-Rings vorhanden.

Der erste Abschnitt 51 des Anschlussteils 5s ist in diesem Ausführungsbeispiel in Form eines schmalen Maulschlüsseleingriffs ausgeführt. An seiner dem zweiten Abschnitt 52 entgegengesetzten Seite schließt sich an den ersten Abschnitt 51 ein sich konisch nach außen erstreckender Kragen 511 an. Auf der Innenseite des Kragens 511 ist ein Verbindungsabschnitt 56 angeordnet, in dem eine Außenverzahnung 563 eingebracht ist, die mit der Innenverzahnung 433 des Verbindungsabschnitts 43 des Basisteils 4₃ korrespondiert und deren Zähne entsprechend den Tälern der Innenverzahnung 433 unterschiedlich hoch ausgebildet sind.

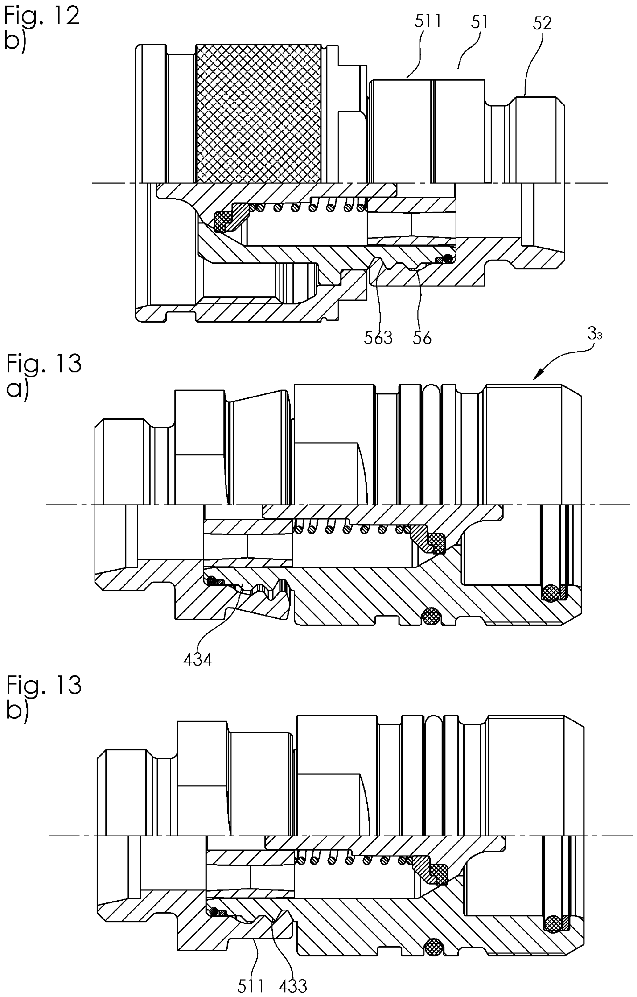

Das Anschlussteil 5₃ ist auf das Basisteil 4₃ aufgeschoben, wobei die Stirnseite des Basisteils 4₃ an den Absatz 54 des Anschlussteils 5s anliegt. Dabei liegt der in der Ausnehmung 44 des Basisteils 4₃ angeordnete O-Ring dichtend an der zylindrischen Innenwandung des ersten Abschnitts 51 des Anschlussteils 5s an (vgl. Figur 12a). Nachfolgend ist der Kragen 511 über ein außen angesetztes - nicht dargestelltes - Presswerkzeug radial umgeformt, sodass die Außenverzahnung 563 des Verbindungsabschnitts 56 mit der Innenverzahnung 433 des Verbindungsabschnitts 43 im Eingriff ist, wobei ein zur Außenverzahnung 563 benachbarte Bereich des Kragens 511 in die Einpressmulde 434 eingeformt ist (vgl. Figur 12b).

Die Verbindungsabschnitte 43, 56 von Basisteil 4₃* und Anschlussteil 5₃ der Kupplungsmuffe 3₃ sind wie in den Figuren 13a und 13b gezeigt in gleicher Weise ausgeführt.

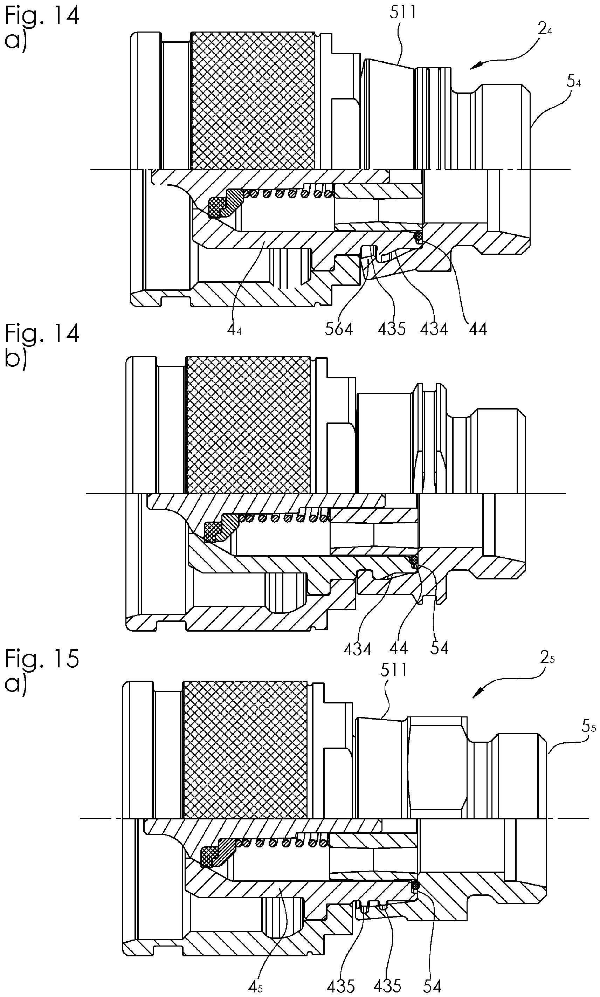

Im Ausführungsbeispiel gemäß Figur 14 ist der Kupplungsstecker 2₄ im Wesentlichen entsprechend dem Kupplungsstecker 2₃ des vorherigen Ausführungsbeispiels gemäß Figur 11 ausgebildet, wobei in dem Verbindungsabschnitt 43 des Basisteils 4₄ an Stelle der Innenverzahnung eine Rastnut 435 eingebracht ist. Beabstandet zur Rastnut 435 ist wiederum eine Einpressmulde 434 vorhanden. Stirnseitig ist in dem Basisteil 4₄ - entsprechend dem Ausführungsbeispiel gemäß Figur 1 - eine Ausnehmung 44 zur Aufnahme eines O-Rings eingebracht.

Auf der Innenseite des Kragens 511 angeordneten Verbindungsabschnitt 56 des Anschlussteils 5₄ ist an Stelle einer Außenverzahnung endseitig ein umlaufender Raststeg 564 zum Eingriff in die Rastnut 435 des Basisteils 5₄ angeordnet. An Stelle der Sechskantform des ersten Abschnitts 51 des Basisteils 5s des vorhergehenden Ausführungsbeispiels ist hier eine weitgehend zylindrische Form vorhanden.

Das Anschlussteil 5₄ ist auf das Basisteil 4₄ aufgeschoben, wobei die Stirnseite des Basisteils 4₄ an den Absatz 54 des Anschlussteils 5₄ über den in der Ausnehmung 44 angeordneten O-Ring dichtend anliegt (vgl. Figur 14a). Nachfolgend ist der Kragen 511 wiederum über ein außen angesetztes - nicht dargestelltes - Presswerkzeug radial umgeformt, sodass der Raststeg 564 des Verbindungsabschnitts 56 mit der Rastnut 435 des Verbindungsabschnitts 43 im Eingriff ist, wobei ein zum Raststeg 564 benachbarter Bereich des Kragens 511 in die Einpressmulde 434 eingeformt ist (vgl. Figur 14b).

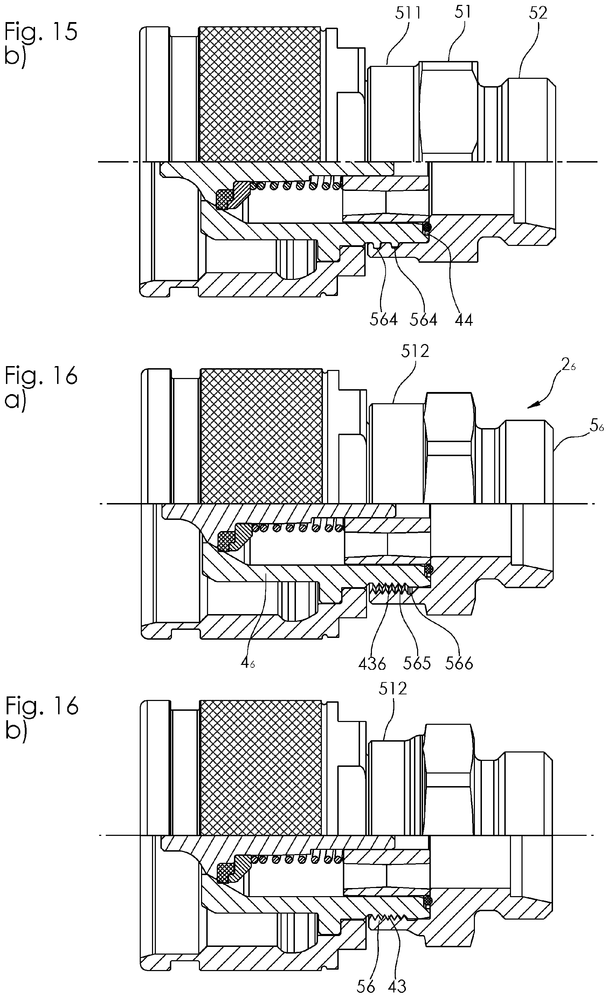

Der Kupplungsstecker 2₅ gemäß Figur 15 entspricht weitestgehend dem Kupplungsstecker 2₄ des vorherigen Ausführungsbeispiels gemäß Figur 14, wobei in dem Verbindungsabschnitt 43 des Basisteils 4₅ benachbart zur ersten Rastnut 435 eine zweite Rastnut 435 eingebracht ist.

Auf der Innenseite des Kragens 511 angeordneten Verbindungsabschnitt 56 des Anschlussteils 5₅ ist benachbart zu dem umlaufenden ersten Raststeg 564 ein zweiter Raststeg 564 zum Eingriff in die Rastnuten 435 des Basisteils 5₅ angeordnet. An Stelle der weitgehend zylindrischen Form des ersten Abschnitts 51 des Basisteils 5₄ des vorhergehenden Ausführungsbeispiels ist hier wieder eine Sechskantform vorhanden.

Das Anschlussteil 5₅ ist wiederum auf das Basisteil 4e aufgeschoben, wobei die Stirnseite des Basisteils 4₅ an den Absatz 54 des Anschlussteils 5₅ über den in der Ausnehmung 44 angeordneten O-Ring dichtend anliegt. (vgl. Figur 15a). Nachfolgend ist der Kragen 511 wiederum über ein außen angesetztes - nicht dargestelltes - Presswerkzeug radial umgeformt, sodass die Raststege 564 des Verbindungsabschnitts 56 mit den Rastnuten 435 des Verbindungsabschnitts 43 im Eingriff sind, wobei ein zu den Raststegen 564 benachbarter Bereich des Kragens 511 in die Einpressmulde 434 eingeformt ist (vgl. Figur 15b).

Der Kupplungsstecker 2e gemäß Figur 16 ist weitgehend entsprechend dem Kupplungsstecker des vorherigen Ausführungsbeispiels gemäß Figur 15 ausgebildet, wobei in dem beabstandet zu dem Steg 42 des Basisteils 4e angeordneten Verbindungsabschnitt 43 eine Geradverzahnung 436 eingebracht ist. Stirnseitig ist in dem Basisteil 4₃ wiederum eine Ausnehmung 44 zur Aufnahme eines O-Rings eingebracht.

An dem ersten Abschnitt 51 des Anschlussteils 5₆ ist hier ein zylindrischer Kragen 512 angeordnet, auf dessen Innenseite ein Verbindungsabschnitt 56 angeordnet ist. In dem Verbindungsabschnitt 56 des zylindrischen Kragens 512 ist eine Geradverzahnung 565 zum Eingriff mit der Geradverzahnung 436 des Basisteils 4e eingebracht. An die Geradverzahnung 565 schließt sich eine Pressmulde 566 an.

Das Anschlussteil 5₆ ist auf das Basisteil 4e aufgeschoben, wobei die Stirnseite des Basisteils 4e wiederum über den in der Ausnehmung 44 angeordneten O-Ring dichtend an dem Absatz 54 des Anschlussteils 5e anliegt. Der Verbindungsabschnitt 56 des zylindrischen Kragens 512 ist beabstandet konzentrisch zu dem Verbindungsabschnitt 43 des Basisteils 4e positioniert (vgl. Figur 16a).

Nachfolgend ist der zylindrische Kragen 512 über ein außen angesetztes - nicht dargestelltes - Presswerkzeug radial umgeformt, sodass die Geradverzahnung 565 des Verbindungsabschnitts 56 mit der Geradverzahnung 436 des Verbindungsabschnitts 43 im Eingriff ist, wobei die Pressmulde 566 des Verbindungsabschnitts 56 unter Bildung einer Materialanhäufung im Übergang von ersten Abschnitt 51 zum zylindrischen Kragen 512 eingedrückt ist (vgl. Figur 16b).

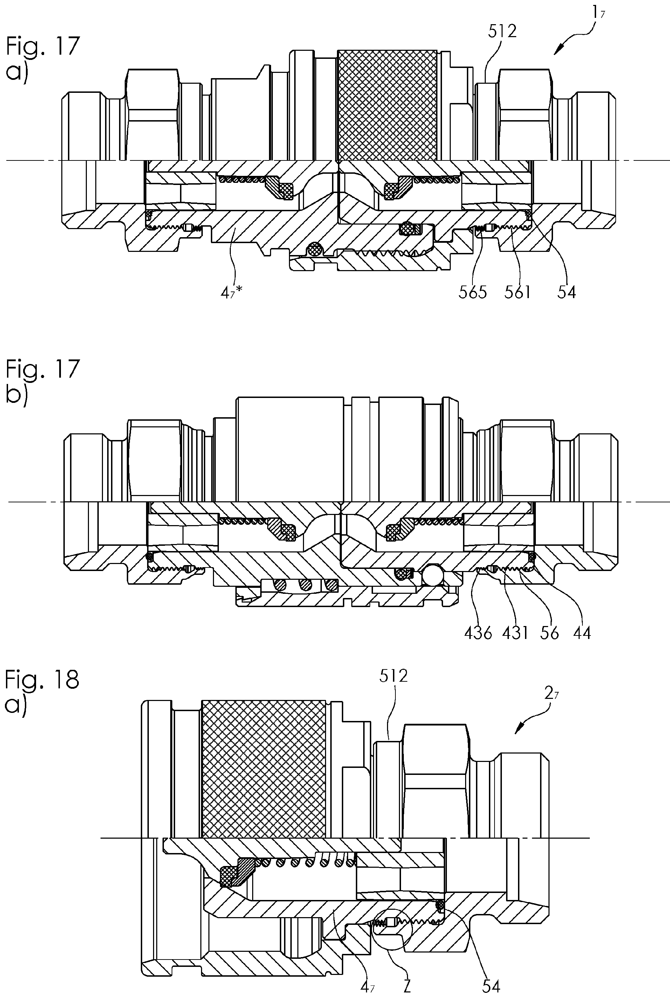

Die Hydraulikkupplung 1₇ gemäß Figur 17 entspricht im Wesentlichen der Hydraulikkupplung gemäß Figur 1, wobei die Verbindungsabschnitte 43, 56 des Basisteils 4₇, 4₇* und des Anschlussteils 5₇ von Kupplungsstecker 2₇ und Kupplungsmuffe 3₇ abweichend ausgebildet sind.

In dem beabstandet zu dem umlaufenden Steg 42 des Basisteils 4₇ des Kupplungssteckers 2₇ angeordneten Verbindungsabschnitt 43 ist eine Geradverzahnung 436 eingebracht. Beabstandet zu der Geradverzahnung 436 ist in dem Verbindungsabschnitt 43 weiterhin ein Außengewinde 431 eingebracht, das sich bis zur Stirnseite des Basisteils erstreckt. In der Stirnseite des Basisteils 4s ist eine Ausnehmung 44 zur Aufnahme eines O-Rings eingebracht.

In den ersten Abschnitt 51 des Anschlussteils 5s ist innen ein Verbindungsabschnitt 56 vorhanden, der sich bist zu dem Absatz 54 erstreckt. In dem Verbindungsabschnitt 56 ist ein Innengwinde 561 angeordnet, das sich bis zum Absatz 54 erstreckt. An seiner dem zweiten Abschnitt 52 entgegengesetzten Seite ist an dem ersten Abschnitt 51 ein zylindrischer Kragen 512 angeordnet, in den an seinem freien Ende beabstandet zu dem Innengewinde 561 eine Geradverzahnung 565 zum Eingriff in die Geradverzahnung 436 des Basisteils 4₇ eingebracht ist.

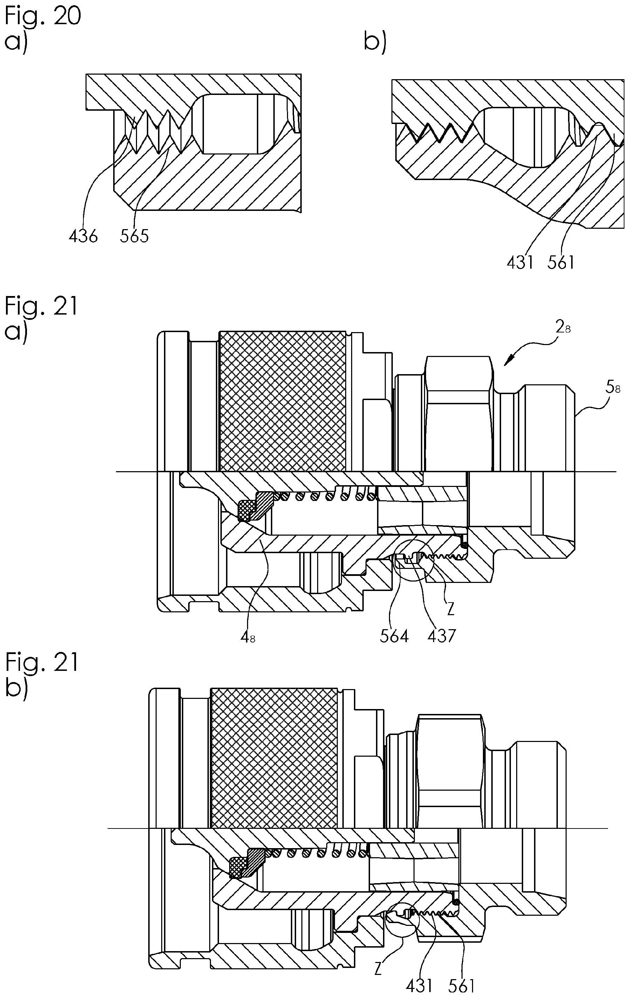

Das Anschlussteil 5₇ ist mit seinem Innengewinde 561 auf das Außengewinde 431 des Basisteils 4₇ aufgeschraubt, wobei die Stirnseite des Basisteils 4₇ an den Absatz 54 des Anschlussteils 5₇ anliegt. Dabei ist der Verbindungsabschnitt 56 des zylindrischen Kragens 512 beabstandet konzentrisch zu dem Verbindungsabschnitt 43 des Basisteils 4₇ positioniert (vgl. Figuren 18a, 20a).

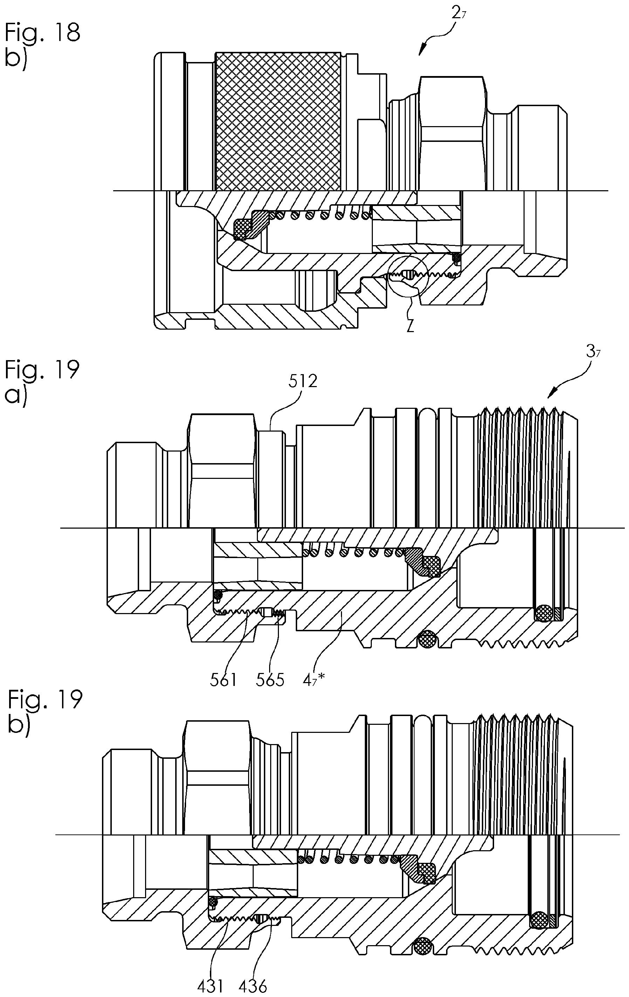

Nachfolgend ist der zylindrische Kragen 512 über ein außen angesetztes - nicht dargestelltes - Presswerkzeug radial umgeformt, sodass die Geradverzahnung 565 des Verbindungsabschnitts 56 mit der Geradverzahnung 436 des Verbindungsabschnitts 43 im Eingriff ist (vgl. Figuren 18b, 20b).

Die Verbindungsabschnitte 43, 56 der Kupplungsmuffe 3₇, über die das Basisteil 4₇* und das Anschlussteil 5₇ verbunden sind, entsprechen den Verbindungsabschnitte 43, 56 des vorstehend beschriebenen Kupplungssteckers 2e (vgl. Figur 19).

Der Kupplungsstecker 2s gemäß Figur 21 entspricht im Wesentlichen dem zuvor beschriebenen Kupplungsstecker 2₇ der Hydraulikkupplung gemäß Figur 18, wobei die Verbindungsabschnitte 43, 56 des Basisteils 4s und des Anschlussteils 5s abweichend ausgebildet sind. Hier ist an dem Basisteil 4s anstelle der Geradverzahnung beabstandet zu dem Innengewinde 431 ein Raststeg 437 angeordnet, wobei auf der Innenseite des zylindrischen Kragens 512 des Anschlussteils 5s anstelle der Geradverzahnung endseitig ein Raststeg 564 vorhanden ist.

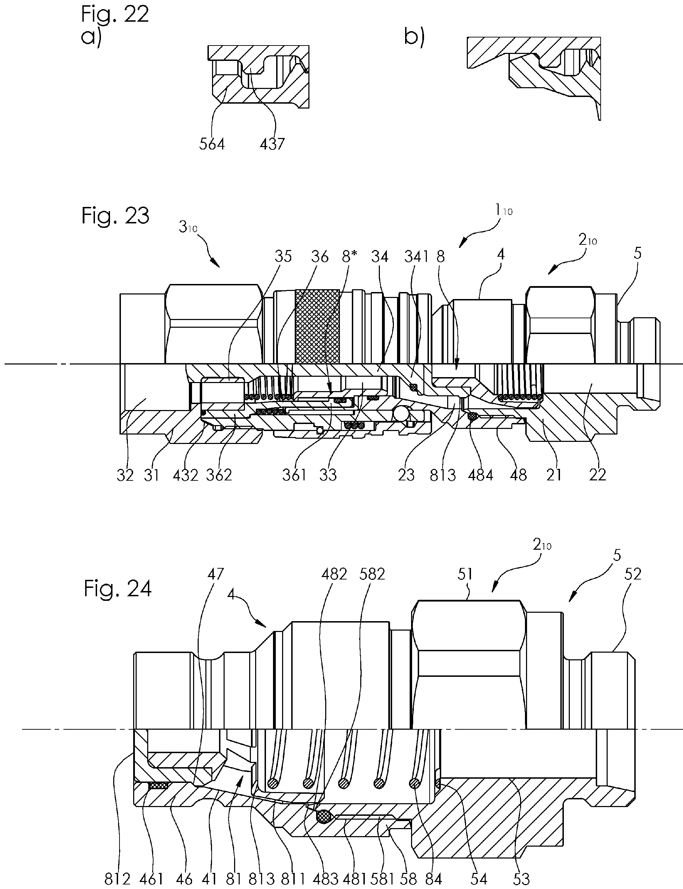

Das Anschlussteil 5s ist wiederum mit seinem Innengewinde 561 auf das Außengewinde 431 des Basisteils 4s aufgeschraubt, wobei die Stirnseite des Basisteils 4s an den Absatz 54 des Anschlussteils 5s anliegt. Dabei ist der Verbindungsabschnitt 56 des zylindrischen Kragens 512 wiederum beabstandet konzentrisch zu dem Verbindungsabschnitt 43 des Basisteils 4s positioniert (vgl. Figuren 21a, 22a).

Nachfolgend ist der zylindrische Kragen 512 über ein außen angesetztes - nicht dargestelltes - Presswerkzeug radial umgeformt, sodass der Raststeg 512 des Anschlussteils 5s den Raststeg 437 des Basisteils 4s hintergreift (vgl. Figuren 21b, 22b).

Selbstverständlich kann die Verbindung von Basisteil und Anschlussteil einer mit diesem Kupplungsstecker 2s kuppelbaren Kupplungsmuffe in der gleichen Weise ausgeführt sein.

Die Hydraulikkupplung 1₁₀ gemäß dem Ausführungsbeispiel nach Figur 23 ist aus einem Kupplungsstecker 2₁₀ und einer Kupplungsmuffe 3₁₀ gebildet, die gegenüber den zuvor beschriebenen Ausführungsbeispielen eine abweichende Konstruktion mit einer anderen Ventilanordnung aufweisen.

Der Kupplungsstecker 2₁₀ weist ein Gehäuse 21 auf, das durch ein Basisteil 4 gebildet ist, das mit einem Anschlussteil 5 verbunden ist. Das Gehäuse 21 ist hohl ausgebildet und weist eine Durchführung 22 auf, in der eine Ventilanordnung 8 angeordnet ist, durch die ein in Axialrichtung verlaufender erster Strömungskanal 23 begrenzt ist.

Die Ventilanordnung 8 umfasst einen als Ventilkörper fungierenden, hohl ausgebildeten Ventilstößel 81, der aus einer Stößelhülse 811 gebildet ist, die mit einer Stößelkappe 812 versehen ist. In der Stößelhülse 811 ist ein Absatz 813 angeordnet, an dem eine Spiralfeder 84 anliegt, über die der Ventilstößel 81 in seine Dichtposition vorgespannt ist. Mit ihrem dem Ventilstößel 81 gegenüberliegenden Ende liegt die Spiralfeder 84 an einem in dem Anschlussteil 5 vorhandenen Absatz 54 an.

Das Basisteil 4 des Gehäuses 21 ist im Wesentlichen als abgestuftes hohlzylindrisches Bauteil ausgebildet. An seinem der Stößelkappe 812 des Ventilstö-ßels 81 zugewandten Ende weist das Basisteil 4 innen einen Innenkonus 41 auf, an den sich ein durchmesserverminderter zylindrischer Führungsabschnitt 46 anschließt, wodurch ein Absatz 47 gebildet ist. In den Führungsabschnitt 46 ist innen eine Ringnut 461 zur Aufnahme eines Dichtrings zur Abdichtung gegenüber der Stößelkappe 812 eingebracht. Die Stößelkappe 812 ist über die Spiralfeder 84 mit einem hierzu an dieser angeordneten Kragen 813 gegen den Absatz 47 vorgespannt. In dieser Position liegt die Stößelkappe 812 in einer Flucht mit der Stirnfläche des Führungsabschnitts 46. An den Innenkonus 41 schließt sich an seiner dem Führungsabschnitt 46 entgegengesetzten Seite ein Verbindungsabschnitt 48 an. In dem Verbindungsabschnitt 48 ist ein Innengewinde 481 angeordnet, das sich bis zu seinem freien Ende erstreckt. Beabstandet zu dem Innengewinde 481 befindet sich ein Pressabschnitt 482, der im Ausführungsbeispiel als Innenkonus ausgebildet ist und der in einem Absatz 483 mündet. Zwischen dem Innengewinde 481 und dem Pressabschnitt 481 ist eine Ringnut 484 zur Aufnahme eines Dichtrings eingebracht.

Das Anschlussteil 5 ist in Form eines rotationssymmetrischen Hohlkörpers ausgebildet. Es weist einen ersten Abschnitt 51 auf, der in Form eines Au-ßensechskants ausgeführt ist, an den sich ein zweiter Abschnitt 52 anschließt, der in Form eines Leitungsanschlusses ausgeführt ist. Dem zweiten Abschnitt 52 gegenüberliegend schließt sich an den ersten Abschnitt 51 ein Verbindungsabschnitt 58 an, in den ein Außengewinde 581 eingebracht ist. Beabstandet zu dem Außengewinde 581 ist in den Verbindungsabschnitt 58 ein Übermaßabschnitt 582 angeordnet, der sich bis in die Stirnseite des Anschlussteils 5 erstreckt. Der Übermaßabschnitt 582 ist im Ausführungsbeispiel konusförmig ausgebildet. Zwischen dem Übermaßabschnitt 582 und dem Außengewinde 581 ist in dem Verbindungsabschnitt ein eine Dichtfläche bildender Freistich eingebracht. Durch das Anschlussteil 5 ist zentrisch eine axiale Stufenbohrung 53 geführt, durch die ein Absatz 54 gebildet ist, an dem die Spiralfeder 84 anliegt.

Das Basisteil 4 ist mit seinem Innengewinde 481 auf das Außengewinde 581 des Anschlussteils 5 aufgeschraubt, wobei die Stirnseite des Anschlussteils 5 an dem Absatz 483 des Basisteils 4 anliegt. Im Zuge des Schraubvorgangs ist der konische Übermaßabschnitt 582 in dem Pressabschnitt 482 hineingezwängt, wodurch er radial mit den Pressabschnitt 482 verpresst ist. Über den in die Ringnut 484 eingelegten Dichtring ist das Basisteil 4 gegenüber den Anschlussteil 5 abgedichtet.

Die Kupplungsmuffe 3₁₀ weist ein Gehäuse 31 auf, das durch ein von dem Kupplungsstecker 2₁₀ abweichendes Anschlussteil 5* gebildet ist, das mit einem ebenfalls abweichend ausgebildeten Basisteil 4* verbunden ist. Das Gehäuse 31 ist hohl ausgebildet und weist eine Durchführung 32 auf, in der eine Ventilanordnung 8* angeordnet ist, durch die ein in Axialrichtung verlaufender zweiter Strömungskanal 33 begrenzt ist. Zentrisch ist in der Durchführung 32 ein Kolben 34 über ein mit axialen Durchlässen versehenes Ringstück 35 ortsfest angeordnet, der endseitig einen durchmessererweiterten Dichtkonus 341 aufweist, der umlaufend mit einem Dichtungsring 342 versehen ist. Dem Ringstück 35 gegenüberliegend ist an dem Anschlussteil 5* ein Verbindungsabschnitt 56 vorhanden, der sich bis zu einem Absatz 54 erstreckt, an dem das Ringstück 35 anliegt. In dem Verbindungsabschnitt 56 ist ein Innengwinde 561 angeordnet. Beabstandet zu dem Innengewinde 561 befindet sich ein Pressabschnitt 562, der in dem Absatz 54 mündet. Der Pressabschnitt 562 ist im Ausführungsbeispiel in Form eines Innenkonus ausgebildet, dessen Innendurchmesse größer ist, als der Außendurchmesser des konischen Übermaßabschnitts 432 des Basisteils 4*.

Auf das Ringstück 35 ist eine erste Innenhülse 36 aufgebracht. Die erste Innenhülse 36 ist im Wesentlichen hohlzylindrisch ausgebildet und weist an ihrem dem Ringstück 35 abgewandten Ende innen zwei beabstandet zueinander angeordnete Stege 361 auf, zwischen denen Dichtungsringe angeordnet sind. An ihrem den Stegen 361 gegenüberliegenden Ende weist die erste Innenhülse 36 einen innendurchmessererweiterten Abschnitt 362 auf, an dem das Ringstück 35 anliegt. Außen schließt sich an den innendurchmessererweiterten Abschnitt 362 eine zweistufige Außendurchmesserreduzierung an, durch ein erster Absatz 363 und ein sich hieran anschließender zweiter Absatz 364 gebildet sind.

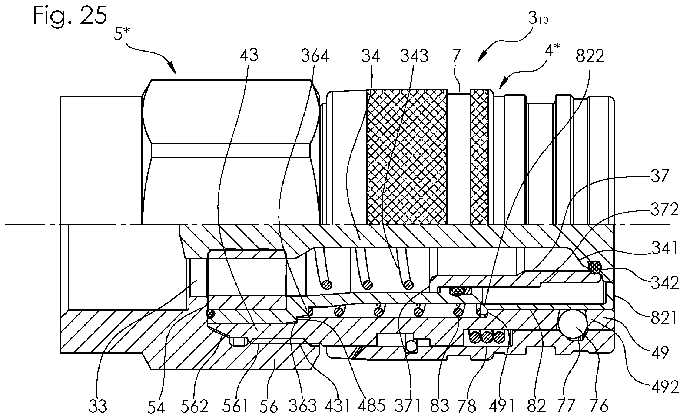

In der ersten Innenhülse 36 ist eine im Wesentlichen hohlzylindrisch ausgebildete zweite Innenhülse 37 angeordnet, die an einem Ende mit ihrer Außenmantelfläche an den Stegen 361 und mit ihrem gegenüberliegenden Ende mit ihrer Stirnseite an dem Dichtkonus 341 des Kolbens 34 sowie mit ihrer Innenmantelfläche an dem Dichtungsring 342 anliegt. Die zweite Innenhülse 37 ist das zentrale Bauteil der Ventilanordnung 8*. An ihrem dem Dichtkonus 341 gegenüberliegenden Ende weist die zweite Innenhülse 37 einen außen umlaufenden Kragen 371 auf, mit dem sie den inneren der Stege 361 der ersten Innenhülse hintergreift, gegen den sie über eine den Kolben 34 umgebende Spiralfeder 343 vorgespannt ist. Wie Figur 25 zu entnehmen ist, ist der Strömungskanal 33 durch den Kolben 34 sowie die erste und die zweite Innenhülse 36, 37 begrenzt.

Das Basisteil 4* des Gehäuses 31 ist im Wesentlichen hohlzylindrisch ausgebildet. An seinem dem Dichtkonus 341 des Kolbens 34 zugewandten Ende weist das Basisteil 4* einen innendurchmessereduzierten Abschnitt 49 auf, durch den ein Absatz 491 gebildet ist. In dem innendurchmessereduzierten Abschnitt 49 sind ringförmig umlaufend nach innen konisch sich verengende Bohrungen 492 eingebracht, die Kugeln 76 aufnehmen. An seinem dem innendurchmessereduzierten Abschnitt 49 gegenüberliegenden Ende ist an dem Basisteil 4* ein Verbindungsabschnitt 43 angeordnet, in den ein Außengewinde 431 eingebracht ist. Beabstandet zu dem Außengewinde 431 ist in dem Verbindungsabschnitt 43 ein Übermaßabschnitt 432 angeordnet, der sich bis in die Stirnseite des Basisteils 4 erstreckt. Der Übermaßabschnitt 432 ist im Ausführungsbeispiel konusförmig ausgebildet.

Das Basisteil 4* ist mit seinem Außengewinde 431 in das Innengewinde 561 des Anschlussteils 5* eingeschraubt, wobei die Stirnseite des Basisteils 4* an den Absatz 54 des Anschlussteils 5* anliegt. Im Zuge des Schraubvorgangs ist der konische Übermaßabschnitt 432 in dem Pressabschnitt 562 hineingezwängt, wodurch er radial mit den Pressabschnitt 562 verpresst ist. Der Verbindungsabschnitt 43 des Basisteils 4* liegt dabei an der ersten Innenhülse 36 an, wobei es mit einem auf seiner Innenseite angeordneten Absatz 485 an dem ersten Absatz 363 der ersten innenhülse 36 anliegt. Die erste Innenhülse 36 ist so fest zwischen dem Ringstück 35 und dem Verbindungsabschnitt 43 des Basisteils 4* gehalten.

Auf das Basisteil 4* ist eine Verriegelungshülse 7 aufgeschoben, die an ihrem dem Dichtkonus 341 des Kolbens 4 zugewandten Ende innen mit einer Ringnut 77 versehen ist, in welche in die Bohrungen 492 des Basisteils 4* eingesetzte Kugeln 76 eingreifen. Die Verriegelungshülse 7 ist über eine zwischen dieser und dem Basisteil 4* angeordnete Spiralfeder 78 in die dem Anschlussteil 5* entgegengesetzte Richtung vorgespannt.

Der Ventilstößel 82 der Kupplungsmuffe 3₁₀ ist in Form einer zylindrischen Hülse ausgebildet, die an ihrem dem Dichtkonus 341 des Kolbens 4 zugewandten Ende einen nach innen ragenden Kragen 821 aufweist, dessen Innendurchmesser im Wesentlichen dem maximalen Außendurchmesser des Dichtkonus 341 entspricht. An ihrem dem Kragen 821 gegenüberliegenden Ende weist der Ventilstößel 82 einen außen umlaufenden Steg 822 auf, mit dem er an dem Absatz 491 des Basisteils 4* anliegt, gegen den er über eine zwischen der ersten Innenhülse 36 und den Basisteil 4* angeordnete Spiralfeder 83 vorgespannt ist. Durch eine Bewegung des Ventilstößels 82 gegen die Vorspannung der Spiralfeder 83 werden zunächst die Bohrungen 492 des Basisteils 4* freigegeben, wodurch die zuvor an dem Ventilstößel 82 anliegenden Kugeln 76 aus der Ringnut 77 der Verriegelungshülse 7 nach innen wandern, wodurch die durch die Kugeln 77 zuvor in ihrer Position gehaltene Verriegelungshülse 7 durch die Vorspannung der Spiralfeder 78 in Richtung des Kupplungssteckers 2₁₀ geschoben wird.

Bei weiterer Bewegung des Ventilstößels 82 schlägt dessen Kragen 821 an einen außen in der zweiten Innenhülse 37 vorhandenen Absatz 372 an, wodurch die zweiten Innenhülse 37 entgegen der Vorspannung der Spiralfeder 343 von dem Dichtkonus 341 des Kolbens 34 wegbewegt wird. Hierdurch wird der zweite Strömungskanal 33 der Kupplungsmuffe 3₁₀ freigegeben. Der Ventilstößel 82 ist folglich Teil der Ventilanordnung 8* und wirkt mit der zweiten Innenhülse 37 zusammen, die hier als Ventilkörper fungiert.

## Patentansprüche

1. Kupplungsteil, insbesondere Kupplungsstecker (2), zum Kuppeln mit einem korrespondierenden zweiten Kupplungsteil, insbesondere einer Kupplungsmuffe (3), einer Kupplung (1) für Druckmittelleitungen, insbesondere Hydraulikleitungen, umfassend
- ein Gehäuse (21, 31), mit einem durchgehenden, in Axialrichtung verlaufenden Strömungskanal (23, 33),
- einen innerhalb des Strömungskanals (23, 33) in axialer Richtung hin und her verschieblich angeordneten Ventilkörper (61, 37, 81) zum Verschließen des Strömungskanals (23, 33) im nicht gekoppelten Zustand des Kupplungsteils (2, 3), wobei der Ventilkörper (61, 37, 81) eine geschlossene, den Strömungskanal verschließende und eine geöffnete, den Strömungskanal (23, 33) nicht verschließende Ventilstellung aufweist,
- eine Verbindungseinrichtung zur mechanischen Verbindung des Kupplungsteils mit dem zu kuppelnden zweiten Kupplungsteil,
wobei das Kupplungsteil (2, 3) ein Basisteil (4, 4*) und ein Anschlussteil (5, 5*) umfasst, welche miteinander verbunden sind und den Strömungskanal (23, 33) ausbilden, wobei das Anschlussteil (5, 5*) einen Anschlussabschnitt zum Anschluss einer Druckmittelleitung aufweist, **dadurch gekennzeichnet, dass** das Basisteil (4, 4*) und Anschlussteil (5, 5*) jeweils wenigstens einen Verbindungsabschnitt (43, 56) aufweisen, wobei wenigstens ein Verbindungsabschnitt (43, 56) des Anschlussteils (5, 5*) radial mit einem Verbindungsabschnitt des Basisteils (4, 4*) verpresst ist.

2. Kupplungsteil nach Anspruch 1, **dadurch gekennzeichnet, dass** wenigstens ein Verbindungsabschnitt (43) des Basisteils (4, 4*) zumindest bereichsweise mit einer Verzahnung (433, 436) versehen ist, die in eine in einem Verbindungsabschnitt (56) des Anschlussteils (5, 5*) vorhandene Verzahnung (563, 565) eingreift, wobei die Verzahnungen (433, 436, 563, 565) der Verbindungsabschnitte (43, 56) des Basisteils (4, 4*) und des Anschlussteils (5, 5*) radial miteinander verpresst sind.

3. Kupplungsteil nach Anspruch 2, **dadurch gekennzeichnet, dass** benachbart zu der Verzahnung (433, 436, 563, 565) eines Verbindungsabschnitts (43, 56) ein Umformabschnitt angeordnet ist, durch dessen Verformung die Verpressung erzielt ist.

4. Kupplungsteil nach Anspruch 2 oder 3, **dadurch gekennzeichnet, dass** die Verzahnung (433, 436, 563, 565) wenigstens einen Bereich mit einer im Querschnitt dreieckförmigen und/oder einer im Querschnitt trapezförmigen und/oder einer im Querschnitt rechteckförmigen Verzahnung aufweist.

5. Kupplungsteil nach einem der Ansprüche 2 bis 4, **dadurch gekennzeichnet, dass** die Verzahnung (433, 563) Zähne unterschiedlicher Höhe aufweist.

6. Kupplungsteil nach einem der Ansprüche 1 bis 5, **dadurch gekennzeichnet, dass** die Verzahnung (433, 563) Zähne aufweist, deren beiden Flanken einen unterschiedlichen Winkel zum Zahngrund aufweisen, wobei der jeweilige Winkel bevorzugt zwischen 45° und 60° beträgt.

7. Kupplungsteil nach einem der Ansprüche 2 bis 6, **dadurch gekennzeichnet, dass** sich an die Verzahnung (433, 436, 563, 565) eine Ringnut (44, 57) zur Aufnahme eines Dichtrings anschließt.

8. Kupplungsteil nach einem der vorgenannten Ansprüche, **dadurch gekennzeichnet, dass** wenigstens ein Verbindungsabschnitt (43) des Basisteils (4, 4*) zumindest bereichsweise mit einem Gewinde (431) versehen ist, das mit einem in einem Verbindungsabschnitt (56) des Anschlussteils (5, 5*) vorhandenen Gewinde (561) im Gewindeeingriff ist.

9. Kupplungsteil nach Anspruch 8, **dadurch gekennzeichnet, dass** das Basisteil (4, 4*) und das Anschlussteil (5, 5*) jeweils eine axiale Anschlagfläche aufweisen, die aneinander anliegen, wobei sich an das Gewinde (431, 561) des Basisteils (4, 4*) oder des Anschlussteils (5, 5*) an seiner der Anschlagfläche zugewandten Seite ein Übermaßabschnitt (432) und an das Gewinde des Anschlussteils (5, 5*) oder des Basisteils (4, 4*) an seiner der Anschlagfläche zugewandten Seite ein in Axialrichtung sich verengender Pressabschnitt (562) anschließt, wobei der Übermaßabschnitt (432) über den Einschraubvorgang mit dem Pressabschnitt (562) zumindest anteilig radial verpresst ist.

10. Kupplungsteil nach Anspruch 9, **dadurch gekennzeichnet, dass** der Übermaßabschnitt (432) zumindest bereichsweise konisch ausgebildet ist.

11. Kupplungsteil nach Anspruch 9 oder 10, **dadurch gekennzeichnet, dass** in der Anschlagfläche des Basisteils und/oder der Anschlagfläche des Anschlussteils eine Ringnut (55) oder eine Ausnehmung (44) zur Aufnahme eines Dichtrings angeordnet ist.

12. Kupplungsteil nach Anspruch 9 oder 10, **dadurch gekennzeichnet, dass** zwischen dem Gewinde (431, 561) und dem Übermaßabschnitt (432) in dem Basisteil (4, 4*) und/oder dem Anschlussteil (5, 5*) eine Ringnut (55) oder ein Absatz (44) zur Aufnahme eines Dichtrings angeordnet ist.

13. Kupplung (1) für eine Druckmittelleitung, insbesondere eine Hydraulikleitung, mit einem Kupplungsstecker (2), der lösbar mit einer Kupplungsmuffe (3) verbunden ist, **dadurch gekennzeichnet, dass** der Kupplungsstecker (2) und/oder die Kupplungsmuffe (3) nach einem der vorgenannten Ansprüche ausgebildet ist.

14. Kupplung nach Anspruch 13, **dadurch gekennzeichnet, dass** der Kupplungsstecker (2) und die Kupplungsmuffe (3) jeweils einen Ventilstößel (61) aufweisen, welche Ventilstößel (61) im Zuge der Verbindung von Kupplungsstecker (2) und Kupplungsmuffe (3) aneinander liegen und jeweils entgegen einer Federvorspannung axial in eine geöffnete Ventilstellung verschoben sind, wodurch die axialen Strömungskanäle (23, 33) von Kupplungsstecker (2) und Kupplungsmuffe (3) geöffnet und miteinander verbunden sind.

## Geänderte Patentansprüche

### Geänderte Patentansprüche gemäss Regel 137(2) EPÜ.

1. Kupplungsteil mit einem ersten federbelasteten Ventil, insbesondere Kupplungsstecker (2), zum Kuppeln mit einem korrespondierenden zweiten, ein zweites federbelastetes Ventil aufweisenden Kupplungsteil, insbesondere einer Kupplungsmuffe (3), einer Kupplung (1) für Druckmittelleitungen, insbesondere Hydraulikleitungen, bei der die Ventile der beiden Kupplungsteile bei deren Zusammenstecken sich gegenseitig selbsttätig öffnen, wodurch deren Strömungskanäle miteinander verbunden sind, und beim Auskuppeln den jeweiligen Strömungskanal mittels Federkraft selbsttätig verschließen, umfassend
- ein Gehäuse (21, 31), mit einem durchgehenden, in Axialrichtung verlaufenden Strömungskanal (23, 33),
- einen innerhalb des Strömungskanals (23, 33) in axialer Richtung hin und her verschieblich angeordneten Ventilkörper (61, 37, 81) zum Verschließen des Strömungskanals (23, 33) im nicht gekoppelten Zustand des Kupplungsteils (2, 3), wobei der Ventilkörper (61, 37, 81) eine geschlossene, den Strömungskanal verschließende und eine geöffnete, den Strömungskanal (23, 33) nicht verschließende Ventilstellung aufweist,
- eine Verbindungseinrichtung zur mechanischen Verbindung des Kupplungsteils mit dem zu kuppelnden zweiten Kupplungsteil,
wobei das Kupplungsteil (2, 3) ein Basisteil (4, 4*) und ein Anschlussteil (5, 5*) umfasst, welche miteinander verbunden sind und den Strömungskanal (23, 33) ausbilden, wobei das Anschlussteil (5, 5*) einen Anschlussabschnitt zum Anschluss einer Druckmittelleitung aufweist, **dadurch gekennzeichnet, dass** das Basisteil (4, 4*) und Anschlussteil (5, 5*) jeweils wenigstens einen Verbindungsabschnitt (43, 56) aufweisen, wobei wenigstens ein Verbindungsabschnitt (43, 56) des Anschlussteils (5, 5*) radial mit einem Verbindungsabschnitt des Basisteils (4, 4*) verpresst ist.

2. Kupplungsteil nach Anspruch 1, **dadurch gekennzeichnet, dass** wenigstens ein Verbindungsabschnitt (43) des Basisteils (4, 4*) zumindest bereichsweise mit einer Verzahnung (433, 436) versehen ist, die in eine in einem Verbindungsabschnitt (56) des Anschlussteils (5, 5*) vorhandene Verzahnung (563, 565) eingreift, wobei die Verzahnungen (433, 436, 563, 565) der Verbindungsabschnitte (43, 56) des Basisteils (4, 4*) und des Anschlussteils (5, 5*) radial miteinander verpresst sind.

3. Kupplungsteil nach Anspruch 2, **dadurch gekennzeichnet, dass** benachbart zu der Verzahnung (433, 436, 563, 565) eines Verbindungsabschnitts (43, 56) ein Umformabschnitt angeordnet ist, durch dessen Verformung die Verpressung erzielt ist.

4. Kupplungsteil nach Anspruch 2 oder 3, **dadurch gekennzeichnet, dass** die Verzahnung (433, 436, 563, 565) wenigstens einen Bereich mit einer im Querschnitt dreieckförmigen und/oder einer im Querschnitt trapezförmigen und/oder einer im Querschnitt rechteckförmigen Verzahnung aufweist.

5. Kupplungsteil nach einem der Ansprüche 2 bis 4, **dadurch gekennzeichnet, dass** die Verzahnung (433, 563) Zähne unterschiedlicher Höhe aufweist.

6. Kupplungsteil nach einem der Ansprüche 1 bis 5, **dadurch gekennzeichnet, dass** die Verzahnung (433, 563) Zähne aufweist, deren beiden Flanken einen unterschiedlichen Winkel zum Zahngrund aufweisen, wobei der jeweilige Winkel bevorzugt zwischen 45° und 60° beträgt.

7. Kupplungsteil nach einem der Ansprüche 2 bis 6, **dadurch gekennzeichnet, dass** sich an die Verzahnung (433, 436, 563, 565) eine Ringnut (44, 57) zur Aufnahme eines Dichtrings anschließt.

8. Kupplungsteil nach einem der vorgenannten Ansprüche, **dadurch gekennzeichnet, dass** wenigstens ein Verbindungsabschnitt (43) des Basisteils (4, 4*) zumindest bereichsweise mit einem Gewinde (431) versehen ist, das mit einem in einem Verbindungsabschnitt (56) des Anschlussteils (5, 5*) vorhandenen Gewinde (561) im Gewindeeingriff ist.

9. Kupplungsteil nach Anspruch 8, **dadurch gekennzeichnet, dass** das Basisteil (4, 4*) und das Anschlussteil (5, 5*) jeweils eine axiale Anschlagfläche aufweisen, die aneinander anliegen, wobei sich an das Gewinde (431, 561) des Basisteils (4, 4*) oder des Anschlussteils (5, 5*) an seiner der Anschlagfläche zugewandten Seite ein Übermaßabschnitt (432) und an das Gewinde des Anschlussteils (5, 5*) oder des Basisteils (4, 4*) an seiner der Anschlagfläche zugewandten Seite ein in Axialrichtung sich verengender Pressabschnitt (562) anschließt, wobei der Übermaßabschnitt (432) über den Einschraubvorgang mit dem Pressabschnitt (562) zumindest anteilig radial verpresst ist.

10. Kupplungsteil nach Anspruch 9, **dadurch gekennzeichnet, dass** der Übermaßabschnitt (432) zumindest bereichsweise konisch ausgebildet ist.

11. Kupplungsteil nach Anspruch 9 oder 10, **dadurch gekennzeichnet, dass** in der Anschlagfläche des Basisteils und/oder der Anschlagfläche des Anschlussteils eine Ringnut (55) oder eine Ausnehmung (44) zur Aufnahme eines Dichtrings angeordnet ist.

12. Kupplungsteil nach Anspruch 9 oder 10, **dadurch gekennzeichnet, dass** zwischen dem Gewinde (431, 561) und dem Übermaßabschnitt (432) in dem Basisteil (4, 4*) und/oder dem Anschlussteil (5, 5*) eine Ringnut (55) oder ein Absatz (44) zur Aufnahme eines Dichtrings angeordnet ist.

13. Kupplung (1) für eine Druckmittelleitung, insbesondere eine Hydraulikleitung, mit einem Kupplungsstecker (2), der lösbar mit einer Kupplungsmuffe (3) verbunden ist, **dadurch gekennzeichnet, dass** der Kupplungsstecker (2) und/oder die Kupplungsmuffe (3) nach einem der vorgenannten Ansprüche ausgebildet ist.

14. Kupplung nach Anspruch 13, **dadurch gekennzeichnet, dass** der Kupplungsstecker (2) und die Kupplungsmuffe (3) jeweils einen Ventilstößel (61) aufweisen, welche Ventilstößel (61) im Zuge der Verbindung von Kupplungsstecker (2) und Kupplungsmuffe (3) aneinander liegen und jeweils entgegen einer Federvorspannung axial in eine geöffnete Ventilstellung verschoben sind, wodurch die axialen Strömungskanäle (23, 33) von Kupplungsstecker (2) und Kupplungsmuffe (3) geöffnet und miteinander verbunden sind.
